Europäisches Patentamt

European Patent Office

Office européen des brevets

(19)

(11) Veröffentlichungsnummer : **0 014 768**
**B1**

(12) **EUROPÄISCHE PATENTSCHRIFT**

(45) Veröffentlichungstag der Patentschrift :
30.09.81

(51) Int. Cl.³ : **B 23 K 11/00**

(21) Anmeldenummer : 79105341.6

(22) Anmeldetag : 21.12.79

(54) Vorrichtung zum Handhaben eines an einem Ausleger schwenk- und drehbar angeordneten Werkzeuges.

(30) Priorität : 15.02.79 DE 2905784
21.12.79 DE 2951832

(43) Veröffentlichungstag der Anmeldung :
03.09.80 (Patentblatt 80/18)

(45) Bekanntmachung des Hinweises auf die Patenterteilung : 30.09.81 Patentblatt 81/39

(84) Benannte Vertragsstaaten :
FR GB IT SE

(56) Entgegenhaltungen :
DE - A1 - 2 717 453
GB - A - 1 511 609

(73) Patentinhaber : INDUSTRIE-WERKE KARLSRUHE
AUGSBURG Aktiengesellschaft Zweigniederlassung
Keller & Knappich
Zugspitzstrasse 140
D-8900 Augsburg (DE)

(72) Erfinder : Zimmer, Ernst, Ing.-grad.
Michael-Steinherr-Strasse 34
D-8904 Friedberg (DE)

(74) Vertreter : Ernicke, Hans-Dieter, Dipl.-Ing.
Schwibbogenplatz 2b
D-8900 Augsburg (DE)

Imprimerie Jouve, 17, rue du Louvre, 75001 Paris, France

**Vorrichtung zum Handhaben eines an einem Ausleger schwenk- und drehbar angeordneten Werkzeuges**

Die Erfindung bezieht sich auf eine Vorrichtung zum Handhaben eines an einem Ausleger schwenk- und drehbar angeordneten Werkzeuges, insbesondere eines Widerstands-Schweißwerkzeuges bei einer Montagestraße für Fahrzeugbaugruppen, bei welcher der Ausleger dreidimensional verstellbar ist.

Mit solchen Vorrichtungen wird angestrebt, den Werkzeughalter innerhalb eines bestimmten räumlichen Arbeitsbereiches genau positionieren und dort auf das Werkzeug die erforderliche Kraft ausüben zu können.

Durch die DE-OS 27 17 453 ist es bekannt, eine Punktschweiß-Halbzange drehbar und schwenkbar an einem Ausleger zu lagern und den Ausleger in einem Traggestell anzuordnen, das oberhalb des zu bearbeitenden Werkstückes in allen drei Dimensionen verstellbar geführt ist und außerdem ein Schwenklager für den Ausleger aufweist.

Der beim Punktschweißen aufzuwendende Schweißdruck muß vom Ausleger aufgenommen werden, der bei der bekannten Anordnung einer erheblichen Biegebeanspruchung unterliegt. Aus dieser Durchbiegung resultiert ein Verrutschen (Radieren) der Elektrodenspitze, was eine übermäßige Abnutzung der Elektrode sowie eine Minderung der Schweißqualität zur Folge hat. Man ist daher gezwungen, den Ausleger besonders biegesteif und daher gewichtsaufwendig zu gestalten. Dadurch ist auch eine massive und einen großen Raum beanspruchende Bauweise des Traggestelles erforderlich. Die linearen Führungen des Traggestelles und des Auslegers können nicht spielfrei gestaltet werden und der Abstand zum Führungsende verändert sich, wodurch sich zusätzliche Durchbiegungen und eine Ungenauigkeit in der Positionierung ergeben.

Der Erfindung liegt die Aufgabe zugrunde, die dreidimensionale Verstellbarkeit des Auslegers auf eine andere Weise zu ermöglichen, bei der die punktförmigen Belastungen des Werkzeuges zu keinen schädlichen Durchbiegungen des Auslegers oder seines Traggestelles führen können und bei der die Belastungen über eine leichter bauende und besser bewegliche Konstruktion aufgefangen werden können.

Diese Aufgabe wird im Sinne der Erfindung dadurch gelöst, daß der Ausleger einerseits an einem Schiebe-Drehgelenk entlang seiner Längsachse beweglich geführt und andererseits über ein Koppelpaar an einem Kurbelpaar angelenkt ist, dessen Kurbeln jeweils ein für sich steuerbares Antriebsaggregat zugeordnet ist.

Mit der Erfindung wird die Möglichkeit geschaffen, Werkzeuge verschiedener Art, z.B. Punktschweißgeräte in Form von Halbzangen oder Punktschweißzylindern, aber auch Schleif- und Bohrwerkzeuge und dgl., dreidimensional zu hantieren und die beim Arbeiten entstehenden Belastungen und Momente einwandfrei abzufangen. Dies gelingt durch die Verzweigung der Belastungen über die Koppel- und Kurbelpaare und durch das Auffangen der Kräfte in einem Schiebe-Drehgelenk, das spielfrei ebenso wie die Gelenke am Koppelgetriebepaar einstellbar ist. Die pyramidenförmige Gestaltung des Koppelgetriebepaares führt auch zur Vereinfachung der Antriebstechnik zur dreidimensionalen Positionierung des Werkzeuges, weil mit den beiden unabhängig voneinander steuerbaren, auf die Kurbeln einwirkenden Antriebsaggregaten auf einfache und schnelle Weise große Bewegungen des Werkzeuges in mehreren Dimensionen ausführbar sind.

Weitere Einzelheiten der Erfindung ergeben sich aus den Unteransprüchen und der Zeichnung. In ihr ist die Erfindung schematisch und beispielsweise dargestellt. Es zeigen :

Figur 1 eine Seitenansicht eines an einem Koppelgetriebepaar geführten Auslegers,

Figur 2 einen Schnitt nach der Linie II-II durch die Anordnung gemäß Figur 1,

Figur 3 einen Schnitt nach der Linie III-III durch ein Schiebe-Drehgelenk gemäß Figur 2,

Figur 4 einen Längsschnitt nach der Linie IV-IV durch den unteren Teil des Auslegers gemäß Figur 1,

Figur 5 und 6 Prinzipdarstellungen von zwei Varianten der Anordnung gemäß Figur 1,

Figur 7 eine Seitenansicht einer weiteren Variante der Anordnung gemäß Figur 1 und

Figur 8 ein Schnitt nach der Linie VIII-VIII durch die Anordnung gemäß Figur 7.

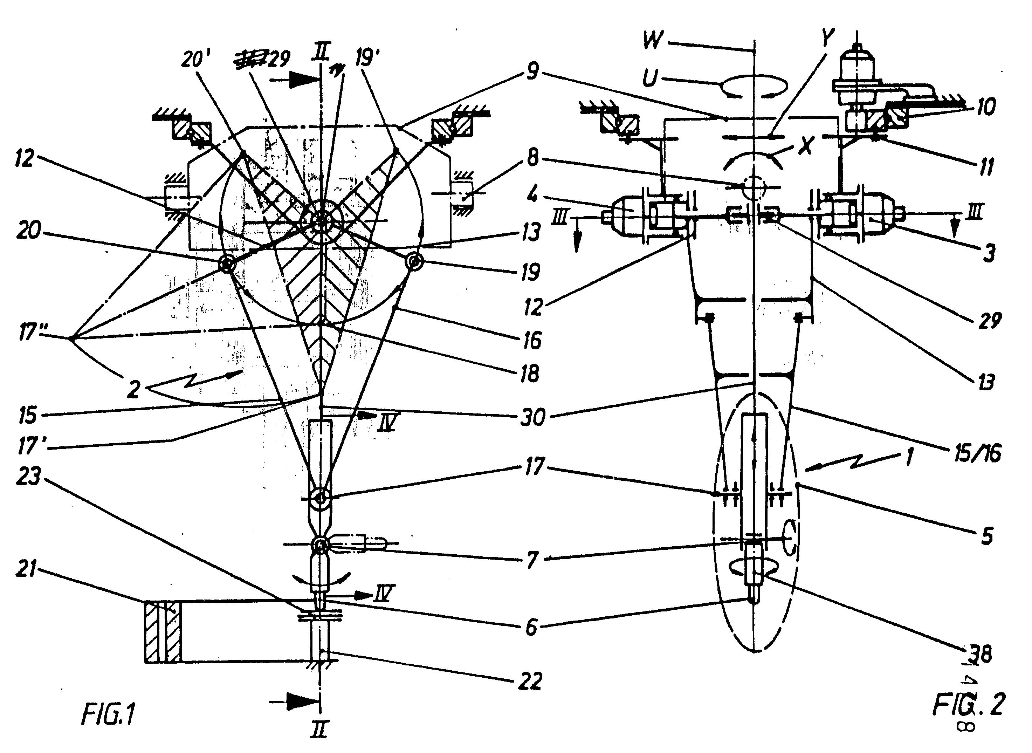

Im Ausführungsbeispiel der Figur 1 und 2 ist ein Ausleger 30 in Verbindung mit einem Koppelgetriebepaar dargestellt, das als pyramidenförmige Viergelenkkonstruktion gestaltet ist und ein schwenk-sowie drehbar angeordnetes Werkzeug, beispielsweise in Form einer Schweißelektrode 6, trägt. Mit 1 ist allgemein das Antriebssystem für die Eigenbewegung des Werkzeuges 6 und mit 2 das Antriebssystem für die Positionierung der Viergelenkkonstruktion bezeichnet. Das Antriebssystem 1 vermittelt dem Werkzeug 6 eine Schwenksowie Drehbewegung. Das Antriebssystem 2 vermag das Werkzeug 6 anzuheben und seitwärts zu bewegen. Zusätzlich kann die Viergelenkkonstruktion drehbar, schwenkbar oder/und linear verschiebbar in einer ortsfesten Tragkonstruktion eingegliedert sein, so daß innerhalb eines räumlichen Bereiches jede Positionierung des Werkzeuges 6 erreichbar ist.

Beim Ausführungsbeispiel sind zwei zur Bewegung des Viergelenksystems 2 vorgesehene Antriebsaggregate 3, 4 sowie ein weiteres Antriebsaggregat 5 zur eigenständigen Bewegung der Schweißelektrode 6 vorgesehen. In diesem Antriebsaggregat 5 sind mindestens zwei Einzelantriebe enthalten, deren einer zum Schwenken der Schweißelektrode 6 um eine Drehachse 7 und deren anderer zum Drehen um die Gelenksystemachse W dient. Ein dritter Einzelantrieb zum Schwenken der Elektrode um den Schnittpunkt der Achse 7 mit der Gelenksystemachse W wäre denkbar. Außerdem deutet ein Pfeil X an, daß — wie bereits erwähnt — die gesamte Vorrichtung um mindestens einen Freiheitsgrad erweiterbar ist, und zwar durch Schwenken um einen Zapfen 8 eines Traggestelles 9, wodurch der Arbeitsbereich vergrößert wird. Wie oben bereits erwähnt, kann auch linear in Richtung Y verfahren werden, wenn die Zapfen 8 durch geeignete Geradführungen (Rollen, Buchsen etc.) ersetzt sind.

Eine weitere Möglichkeit, einen zusätzlichen Freiheitsgrad zu erhalten, ergibt sich durch die Anordnung eines Drehkranzes 10, dessen Außenring stationär angeordnet ist und auf dessen Innenring die Vorrichtung als Ganzes mittels einer Konsole 11 um die Achse W drehbar gelagert ist. Diese Anordnung ergibt ähnlich den mit X oder Y bezeichneten Freiheitsgraden einen Freiheitsgrad U, der in Figur 2 durch einen, die Drehung andeutenden doppelseitigen Pfeil angedeutet ist. Diese Dreheinrichtung wird durch eine Antriebseinheit, die aus Motor, Bremse, Getriebe, Drehzahlgeber und Weggeber besteht, angetrieben. Mit dieser Anordnung ergibt sich somit als geometrische Form der Arbeitsbereiches eine Kreisfläche.

Es soll noch explizit darauf hingewiesen werden, daß die durch die Bewegungsrichtungen U, X, Y angegebenen Möglichkeiten für einen ergänzenden Freiheitsgrad in erster Linie Alternativvorschläge sind. Bei entsprechender Dimensionierung lassen sich diese Freiheitsgrade auch so realisieren, daß sie sich überlagern können.

Der Aufbau des erfindungsgemäßen Gelenksystems ist folgender :

Das erwähnte Viergelenk-Antriebssystem 2 besteht aus zwei Kurbeln 12, 13, die mittels der genannten Antriebsaggregate 3, 4 um die Schwenkachse 14 eines beim Ausführungsbeispiel festliegenden Schiebe-Drehgelenks 29 schwenkbar sind. Die genannten Kurbeln 12, 13 sind an ihren freien Enden bei 19, 20 je mit einer Koppel 15, 16 gelenkig verbunden, die ihrerseits mit ihren freien Enden ein Gelenk 17 bilden, an dem der Ausleger 30 aufgehängt ist. Dieser Ausleger 30 ist außerdem im Schiebe-Drehgelenk 29 entlang der Auslegerlängsachse linear bewegbar geführt. Das Gelenk 17 kann aus Fertigungs- und Montagegründen selbstverständlich auch teilbar realisiert werden. Am Ausleger 30 ist über die Drehachse 7 ein Punktschweißzylinder 38 aufgehängt, der demzufolge auch mit den Bewegungen dieses der Spitze des pyramidenförmigen Gelenksystems entsprechenden Gelenkpunktes 7 im Raum bewegt wird. Wie bereits erwähnt, verfügt der Punktschweißzylinder 38, der auch durch andere Werkzeuge ersetzbar ist, über ein eigenes Antriebsaggregat 5, das zur Drehung und Schwenkung der Schweißelektrode 6 vorgesehen ist.

Die Wirkungsweise bzw. Arbeitsweise des Gelenksystems basiert auf den Bewegungsabläufen, denen die Kurbeln 12, 13 unterworfen werden.

Auszugehen ist von der in Figur 1 gezeigten Grundstellung mit bezogen auf die festliegende Schwenkachse 14 gleichen Winkelstellungen. Bei dieser Grundstellung ergeben sich relativ zur Schwenkachse zwei kongruente Dreiecke, deren gemeinsame Basis durch den Ausleger 30 realisiert ist und mit der Systemachse W zusammenfällt. Die Basis wird von dem Gelenkpunkt 17' bzw. 17 und der Schwenkachse 14 begrenzt. Die drehbeweglichen Verbindungspunkte der Kurbeln 12, 13 und Koppeln 15, 16 sind als Raumpunkte 19 und 20 bezeichnet.

Werden die beiden Kurbeln 12, 13 nun gegenläufig, aber gleichmäßig nach oben oder unten bewegt, so bewegen sich die genannten Raumpunkte 19 und 20 auf Kreisbogen um die Schwenkachse 14, wobei die Spitze des Gelenksystems linear längs der Systemachse W geführt wird. Die resultierenden oberen Endpunkte der Gelenke 17, 19, 20 sind mit den Bezugszeichen 17', 19' bzw. 20' angedeutet.

Bewegt man beide Kurbeln 12, 13 gleichsinnig und gleichmäßig, dann ergibt sich eine Schwenkbewegung des Auslegers 30 um die Schwenkachse 14, wobei der Ausleger 30, ausgehend von der Anordnung gemäß Figur 1, immer die Winkelhalbierende der Kurbeln 12, 13 und Koppeln 15, 16 bildet. Befindet sich das Gelenk 20 im Punkt 20' und hat sich die Kurbel 12 gleichsinnig um den gleichen Winkel und die Kurbel 13 nach Punkt 18 gedreht, dann ergibt sich für das Gelenk 17 eine seitliche Verlagerung in den Punkt 17".

Die Kurbeln 12, 13 können aber auch ungleich große Schwenkwege, gleichsinnig oder in entgegengesetzter Richtung ausführen, was zur Überlagerung von Schwenk- und Hubbewegungen am Gelenk 17 führt.

Der Vollständigkeit halber ist in Figur 1 und 2 noch eine Schweißeinrichtung allgemein dargestellt. Die Schweißelektrode 6 ist mit dem einen Anschluß eines Schweißtransformators 21 und dessen zweiter Anschluß ist mit einem sog. Unterkupfer 22 als gegendruckerzeugendes Element verbunden. Zwischen der Spitze der Schweißelektrode 6 und diesem Unterkupfer 22 liegen dann die zu verschweißenden Werkstückteile 23. Außerdem sei noch erwähnt, daß das Gelenksystem statisch in bekannter Weise ausgeglichen werden kann durch geeignete Anordnung z.B. eines pneumatischen Gewichtsausgleichsystems.

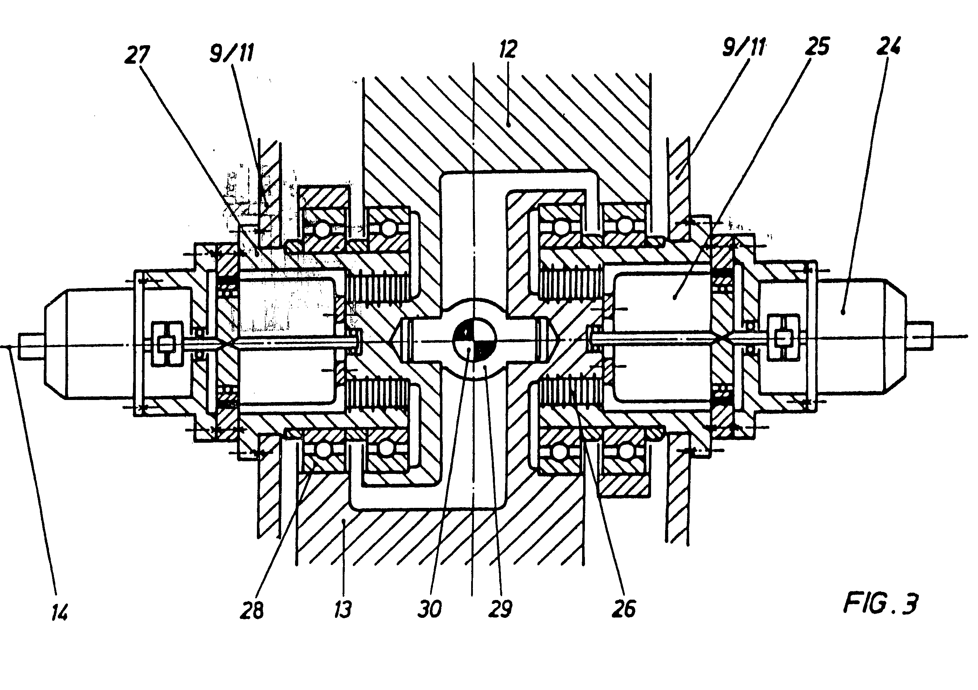

In Figur 3 ist die konstruktive Ausgestaltung der Antriebsaggregate 3 und 4, sowie deren Verbindung mit einem Traggestell 9 und den Kurbeln 12, 13 dargestellt. Kernstück der Antriebsaggregate 3, 4 ist jeweils der bevorzugt als (Motor-) Einheit 24 ausgebildete, aus Motor, Drehzahlgeber und Weggeber bestehende eigentliche Antrieb. Diese Motor-Einheit 24 wirkt auf ein Getriebe 25, dem eine Bremse 26 vorgelagert ist. Damit wird zumindest ein Teil des Drehmoments, das durch Einwirken von Kräften auf die Spitze des Gelenksystems zu der Schwenkache 14 entsteht, vom Getriebe ferngehalten.

Die beiden Kurbeln 12, 13 sind je mit einer Motor-Einheit 24 fest verbunden und an einem mit dieser Motor-Einheit und der Trageinheit verflanschten Rohr 27 über Kugellager 28 abgestützt.

Zentraler Mittepunkt der beschriebenen, aus den Antriebsaggregaten 3 und 4 bestehenden Antriebseinheit für die Kurbeln 12, 13 ist ein Schiebe- und Drehgelenk 29, dessen Rotationsachse mit der Schwenkachse 14 der Kurbeln 12, 13 zusammenfällt und das zur Abstützung des Gelenksystems dient. Durch dieses Schiebe- und Drehgelenk 29 ist der Ausleger 30 linear beweglich geführt. In der Fachsprache wird der Ausleger 30 oft auch als Baum bezeichnet.

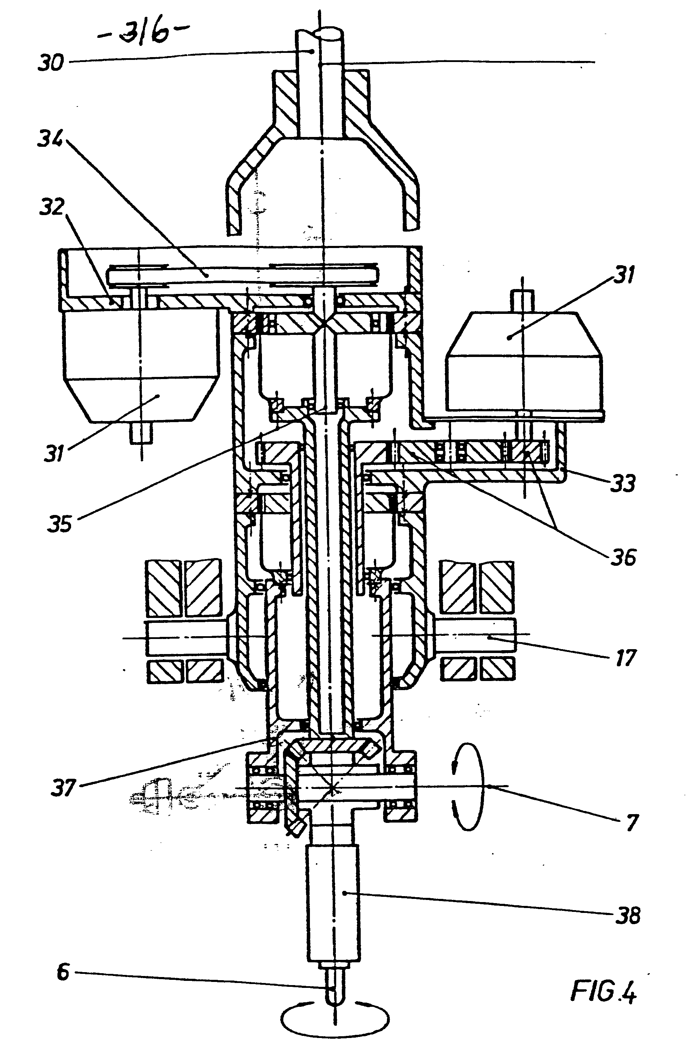

Figur 4 zeigt die Prinzipausführung des Antriebsaggregates 5 für die Bewegungen der Schweißelektrode 6. Das Antriebsaggregat 5 besteht im wesentlichen aus zwei Motor-Einheiten 31, die aus Motor, Drehzahlgeber, Weggeber und Bremse bestehen und mittels Konsolen 32, 33 am Ausleger 30 befestigt sind. Die Schwenkbewegung der Schweißelektrode 6 um die Achse 7 wird entsprechend dem dargestellten Ausführungsbeispiel über einen auf eine Welle 35 wirkenden Zahnriemen 34 vermittelt. Diese Welle 35 führt über ein Untersetzungsgetriebe auf eine Kegelradpaarung, wodurch letztlich die Schweißelektrode 6 um die Achse 7 geschwenkt wird.

Die rotatorische Bewegung der Schweißelektrode 6 wird über einen Zahnradantrieb 36 vermittelt, der über ein Untersetzungsgetriebe auf eine Welle 37 wirkt. Diese Welle 37 ist an ihrem Ende als Lager zur Aufnahme der Schwenkachse 7 ausgebildet. Mit dieser Schwenkachse 7 ist der Punktschweißzylinder 38 verbunden, dessen Energiezuführung (Schweißstrom, Druckenergie, Kühlwasser) in bekannter Weise über im Bild nicht dargestellte integrierte Schleifkontakte und Drehanschlüsse erfolgt.

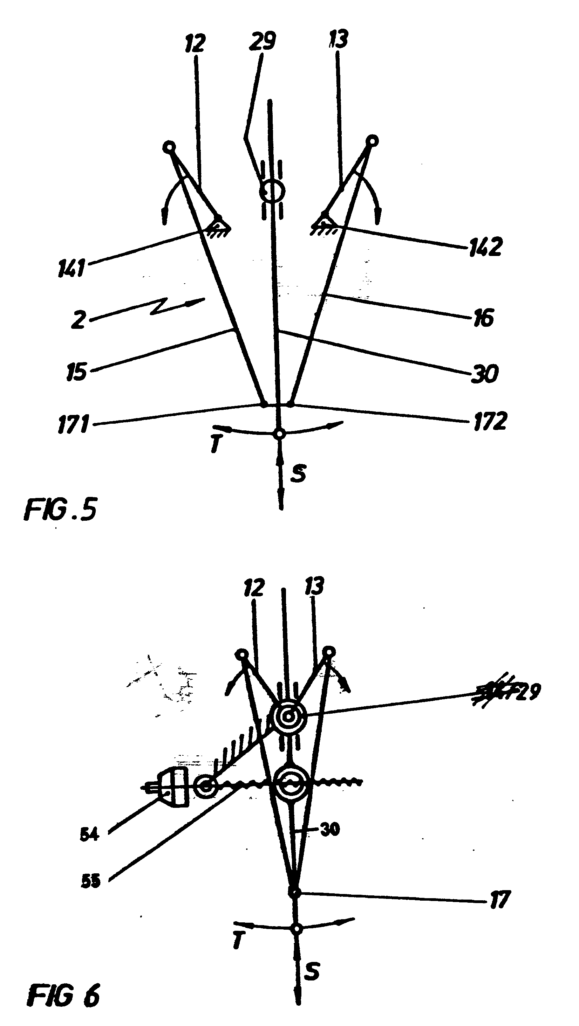

In Figur 5 ist ein zweites Ausführungsbeispiel eines pyramidenförmigen Gelenksystems dargestellt. Der prinzipielle Unterschied zu dem vorher beschriebenen und anhand der Figur 2 gezeigten pyramidalen Antriebssystem besteht darin, daß das Schiebe-Drehgelenk 29 bezüglich der Schwenkachse 14 aufgesplittet ist. Das Schiebe-Drehgelenk 29 ist praktisch auseinandergezogen und durch das Schiebe-Drehgelenk 29' sowie durch zwei im Raum festliegende Schwenkachsen 141, 142 realisiert. Um jede dieser separierten Schwenkachsen 141, 142 ist eine Kurbel 12, 13 schwenkbar geführt. Mit dem freien Ende dieser Kurbeln ist je eine Koppel 15, 16 gelenkig verbunden. Beide Koppeln führen dann zum gemeinsamen Gelenkpunkt, der letztlich Spitze des kompletten Gelenksystems ist. Dieser gemeinsame Gelenkpunkt ist im dargestellten Prinzip entsprechend der oben erwähnten Möglichkeit in zwei Gelenkpunkte 171, 172 aufgesplittet. Werden nun die auch bei diesem Beispiel unabhängig voneinander steuerbaren Kurbeln 12, 13 bewegt, so können damit die Gelenkpunkte 171, 172 entsprechend dem Richtungspfeil S in vertikaler Richtung und entsprechend dem Richtungspfeil T auf einem Kreisbogen bewegt werden. Zentraler Punkt des gesamten Gelenksystems ist in diesem Falle ein Schiebe- und Drehgelenk 29', durch welches der Ausleger 30 linear bewegbar geführt ist.

Das in Figur 6 gezeigt Ausführungsbeispiel unterscheidet sich von denjenigen gemäß Figur 1 und 5 dadurch, daß die beiden Kurbeln 12, 13 nicht unabhängig voneinander antreibbar sind. Beide Kurbeln 12, 13 werden über ein und dieselbe Antriebseinheit bewegt, wobei durch Zwischenkopplung, z.B. eines die Drehrichtung ändernden Zahnrades, die symmetrische Bewegung der Kurbeln 12, 13 realisiert ist. Über die Kurbeln 12, 13 können bei diesem Beispiel somit nur Vertikalbewegungen S des Gelenkpunktes 17 ausgeführt werden.

Um diesen Gelenkpunkt 17 auch auf einem Kreisbogen T führen zu können, ist eine gesonderte Antriebseinheit 54 vorgesehen, die relativ zum Schiebe-Drehgelenk, 29'' ortsfest liegt. Über ein Antriebselement, wie z.B. eine Gewindespindel 55, greift die Antriebseinheit am Ausleger 30 des Gelenksystems an und bewegt dieses somit kreisförmig um die Schwenkachse 14.

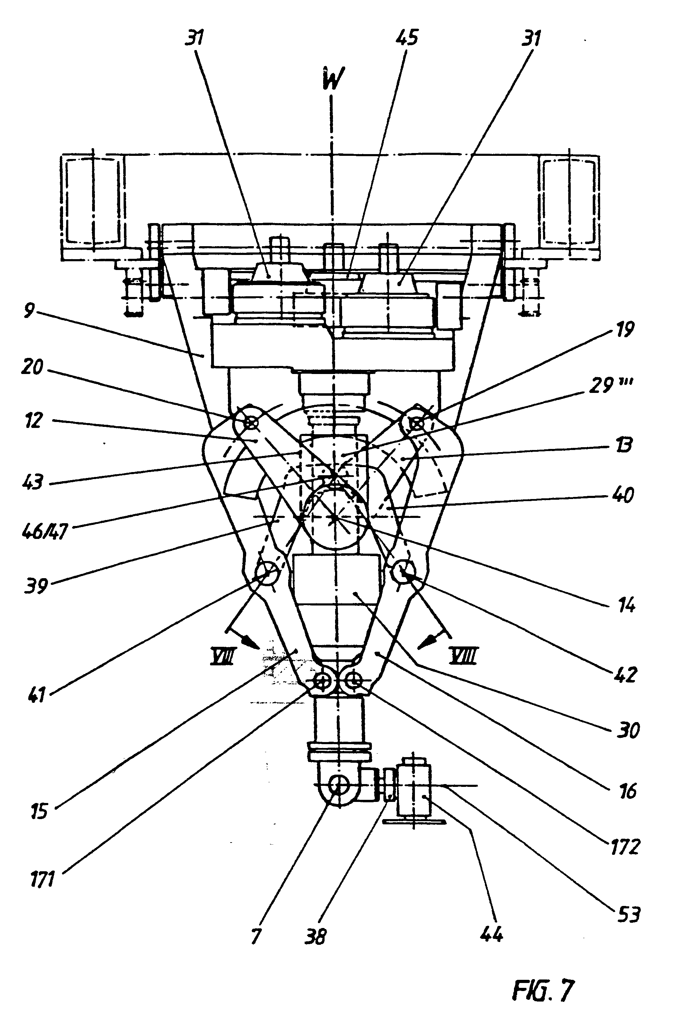

Beim Ausführungsbeispiel der Figur 7 ist das Schiebe-Drehgelenk 29''' entlang der Längsachse des Auslegers 30 bewegbar geführt. Zu diesem Zweck greifen am Schiebe-Drehgelenk 29''' in Gelenken 46, 47 gelagerte Lenker 39, 40 an, die mit den Gelenken 41, 42 an den Koppeln 15, 16 abgestützt sind. Das Schiebe-Drehgelenk 29''' wird bei diesem Beispiel von einer Muffe 43, die ihrerseits am Ausleger 30 durch ein nicht dargestelltes Schiebelager geführt ist und den mit der Muffe 43 verbundenen Gelenken 46, 47 gebildet. Der Ausleger 30 trägt an seinem unteren Ende über die Drehachse 7 einen Werkzeughalter 38, an dem beispielsweise ein Schleifwerkzeug 44 angeordnet ist.

Die lineare Beweglichkeit des Schiebe-Drehgelenkes 29''' hat zur Folge, daß der Ausleger 30 wesentlich kürzer als beim Ausführungsbeispiel der Figur 1 und 2 ausgebildet werden kann, obwohl der Hub der gleiche (bei gleichen Kurbel- und Koppellängen) geblieben ist. Dies bringt den Vorteil mit sich, daß die Antriebe 31 für die Erzeugung der Schwenk- und Drehbewegung des Werkzeughalters 38 sowie gegebenenfalls ein weiterer Antrieb 45 für die Erzeugung einer Werkzeugbewegung, z.B. Rotation des Schleifwerkzeuges 44 um eine weitere Drehachse 53, oberhalb der Schwenkachse 14 am Ausleger 30 befestigt werden können. Auf diese Weise kann man einen Gewichtsausgleich des gesamten Systems, bezogen auf die Schwenkachse 14, wenigstens annähernd herbeiführen.

Es hat sich als zweckmäßig erwiesen, die Koppeln 15, 16 als Winkelhebel auszubilden und zwar in der Weise, daß die Gelenke 19, 20 oder/und 171, 172 gegenüber einer durch die Gelenke 41, 42 gedachten Längsachse der Koppeln 15, 16 näher an der vertikalen Systemachse W liegen. Dadurch baut das Koppelgetriebepaar 12, 13, 15, 16 wesentlich schlanker, ohne Einbußen an den Hub- und Schwenkwegen zu erfahren.

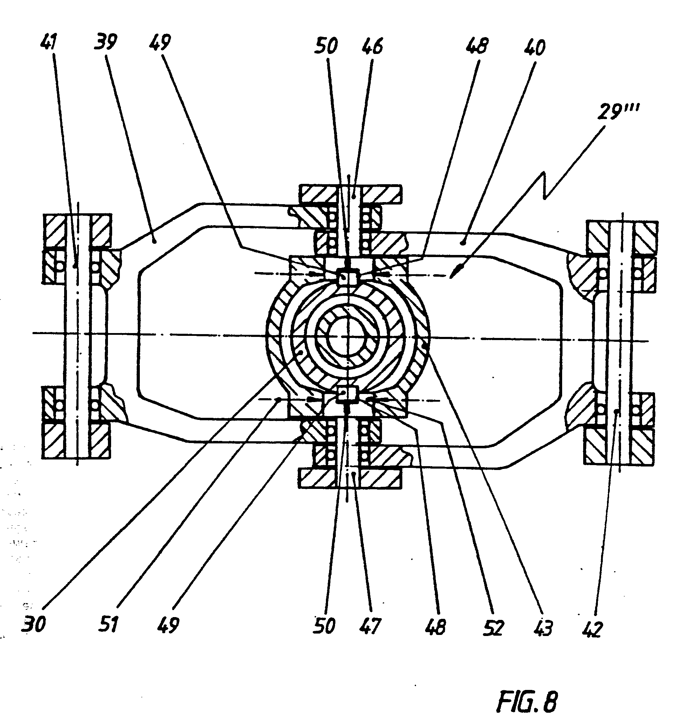

Die in Figur 8 im Schnitt dargestellte Variante der Anordnung gemäß Figur 7 unterscheidet sich von dieser dadurch, daß die lineare Führung des Auslegers 30 im Schiebe-Drehgelenk 29''' über Gelenkzapfen 46, 47 erfolgt, welche die Muffe 43 durchgreifen und an ihrem inneren Ende Führungselemente in Form von Nuten 48 aufweisen, in welche Führungselemente in Form von Leisten 49 eingreifen, die am Ausleger 30 befestigt sind.

Die Gelenkzapfen 46, 47 bilden zugleich die Gelenke für die Lenker 39, 40. Im übrigen wird der Ausleger 30 von der Muffe 43 mit Spiel umgriffen.

Damit das Spiel zwischen den Gelenkzapfen 46, 47 und den Leisten 49 einstellbar ist, befinden sich in den Gelenkzapfen 46, 47, und zwar im Grund der Führungsnuten 48, je ein Schlitz 50, durch den die die Führungsnut 48 begrenzenden Schenkel 52 elastisch verformbar sind. Man kann nun mit Hilfe von Stellschrauben 51, die sich in der Muffe 43 von außen her zugänglich befinden und auf die Schenkel 52 einwirken, das Spiel ein- bzw. nachstellen.

Stückliste

1 Antriebssystem
2 Antriebssystem
3 Antriebsaggregat
4 Antriebsaggregat
5 Antriebsaggregat
6 Werkzeug (Schweißelektrode)
7 Drehachse
8 Zapfen
9 Traggestell
10 Drehkranz
11 Konsole
12 Kurbel
13 Kurbel
14 Schwenkachse
15 Koppel
16 Koppel
17 Gelenk
17' Gelenk
17" Gelenkpunkt
18 Gelenkpunkt
19 Gelenk
19' Gelenk
20 Gelenk
20' Gelenk
21 Schweißtransformator
22 Unterkupfer
23 Werkstückteile
24 Motoreinheit
25 Getriebe
26 Bremse
27 Rohr
28 Kugellager
29 Schiebe-Drehgelenk
29' Schiebe-Drehgelenk
29" Schiebe-Drehgelenk

29''' Schiebe-Drehgelenk
30 Ausleger
31 Motoreinheit
32 Konsole
33 Konsole
34 Zahnriemen
35 Welle
36 Zahnradantrieb
37 Welle
38 Werkzeughalter (Punktschweißzylinder)
39 Lenker
40 Lenker
41 Gelenk
42 Gelenk
43 Muffe
44 Schleifwerkzeug
45 Antrieb
46 Gelenkzapfen
47 Gelenkzapfen
48 Führungsnut
49 Leiste
50 Schlitz
51 Stellschraube
52 Schenkel
53 Drehachse
54 Antriebseinheit
55 Gewindespindel
141 Schwenkachse
142 Schwenkachse
171 Gelenk
172 Gelenk

Ansprüche

1. Vorrichtung zum Handhaben eines an einem Ausleger (30) schwenk- und drehbar angeordneten Werkzeuges (6), insbesondere eines Widerstands-Schweißwerkzeuges bei einer Montagestraße für Fahrzeugbaugruppen, bei welcher der Ausleger (30) dreidimensional verstellbar ist, dadurch gekennzeichnet, daß der Ausleger (30) einerseits an einem Schiebe-Drehgelenk (29, 29', 29", 29''') entlang seiner Längsachse beweglich geführt und andererseits über ein Koppelpaar (15, 16) an einem Kurbelpaar (12, 13) angelenkt ist, dessen Kurbeln (12, 13) jeweils ein für sich steuerbares Antriebsaggregat (3, 4) zugeordnet ist.

2. Vorrichtung nach Anspruch 1, dadurch gekennzeichnet, daß die Schwenkachsen (14, 141, 142) der Kurbeln (12, 13) am Schiebe-Drehgelenk (29, 29', 29", 29''') oder in dessen Nachbarschaft angeordnet sind.

3. Vorrichtung nach Anspruch 1 oder 2, dadurch gekennzeichnet, daß die Längsachse des Auslegers (30) in der Winkelhalbierenden der Kurbeln (12, 13) bzw. Koppeln (15, 16) geführt ist.

4. Vorrichtung nach Anspruch 1 oder folgenden, dadurch gekennzeichnet, daß das Schiebe-Drehgelenk (29, 29', 29", 29''') an einem Traggestell (9) der Vorrichtung angeordnet ist.

5. Vorrichtung nach Anspruch 1 oder einem der folgenden, dadurch gekennzeichnet, daß die Schwenkachse (14) des Schiebe-Drehgelenks (29, 29', 29", 29''') mit der Schwenkachse (14) der Kurbeln (12, 13) übereinstimmt und im Schiebe-Drehgelenk (29, 29', 29", 29''') der Ausleger (30) linear geführt ist.

6. Vorrichtung nach Anspruch 1 oder einem der folgenden, dadurch gekennzeichnet, daß die Kurbeln (12, 13) gegenüber dem Traggestell (9) durch zwischengefügte Bremsen (26) abstützbar sind.

7. Vorrichtung nach Anspruch 1 oder einem der folgenden mit einem Antrieb (31) zum Verschwenken und Verdrehen des am Ausleger (30) gelagerten Werkzeughalters (38), dessen Antriebswelle (35) den als Hohlkörper ausgebildeten Ausleger (30) durchsetzt, dadurch gekennzeichnet, daß zwei zur Längsachse des Auslegers (30) koaxiale Wellen (35, 37) mit zugeordneten Antrieben (31) vorgesehen sind, von denen die eine Welle (35) einen Winkeltrieb antreibt, dessen Antriebsrad mit dem Werkzeughalter (6, 38) verbunden ist und auf einer Gelenkachse (7) sitzt, die an der anderen Welle (37) quer zur Längsachse des Auslegers (30) gelagert ist.

8. Vorrichtung nach Anspruch 1 oder einem der folgenden, dadurch gekennzeichnet, daß die Koppeln (15, 16) an beidseits der Längsachse des Auslegers (30) angeordneten Lagern (171, 172) angelenkt sind.

9. Vorrichtung nach Anspruch 1, dadurch gekennzeichnet, daß ein auf den Ausleger (30) quer zu seiner Längsachse einwirkenden Schwenkantrieb (54, 55) vorgesehen ist.

10. Vorrichtung nach Anspruch 1 oder einem der folgenden, dadurch gekennzeichnet, daß das Schiebe-Drehgelenk (29''') ortsbeweglich angeordnet und über ein Lenkerpaar (39, 40) mit den Koppeln (15, 16) gelenkig verbunden ist.

11. Vorrichtung nach Anspruch 10, dadurch gekennzeichnet, daß das Schiebe-Drehgelenk (29''') als Muffe (43) ausgebildet ist und eine entlang der Längsachse des Auslegers (30) sich erstreckende Schiebeführung (48, 49) für den Ausleger (30) aufweist.

12. Vorrichtung nach Anspruch 10, dadurch gekennzeichnet, daß das Schiebe-Drehgelenk als Muffe (43) ausgebildet ist die den Ausleger (30) mit Spiel umgreift, und daß die das Lenkerpaar (39, 40) an der Muffe (43) führenden Gelenkbolzen (46, 47) die Muffe (43) nach innen durchsetzen und mit Führungselementen (48) versehen sind, an denen der Ausleger (30) mit passenden Führungselementen (49) linear bewegbar ist.

13. Vorrichtung nach Anspruch 10 oder folgenden, dadurch gekennzeichnet, daß die Koppeln (15, 16) als Winkelhebel ausgebildet sind, deren den Kurbeln (12, 13) oder/und dem Ausleger (30) zugeordneten Gelenke (19, 20, 171, 172) näher der Längsachse des Auslegers (30) gelegen sind als die durch den Anlenkpunkt der Lenker (42) gedachte Längsachse der Koppel (15, 16).

## Claims

1. A device for manipulating a tool (6) which is pivotably and rotatably disposed on an arm (30), in particular a resistance welding tool on an assembly line for vehicle subassemblies, in which the arm (30) is adjustable in three dimensions, characterised in that the arm (30), on the one hand, is guided movably on a sliding swivel (29, 29', 29", 29''') along its longitudinal axis and, on the other hand, is coupled via a pair of connecting rods (15, 16) to a pair of cranks (12, 13) each of which is associated with a separately controllable drive unit (3, 4).

2. A device, according to Claim 1, characterised in that the pivoting axes (14, 141, 142) of the cranks (12, 13) are disposed at the sliding swivel (29, 29', 29", 29''') or in the vicinity thereof.

3. A device, according to Claim 1 or 2, characterised in that the longitudinal axis of the arm (30) is guided in the angle bisectors of the cranks (12, 13) or of the connecting rods (15, 16).

4. A device, according to Claim 1 or any subsequent claim, characterised in that the sliding swivel (29, 29', 29", 29''') is disposed on a supporting structure (9) of the device.

5. A device, according to Claim 1 or any one of the subsequent claims, characterised in that the pivoting axis (14) of the sliding swivel (29, 29', 29", 29''') corresponds to the pivoting axis (14) of the cranks (12, 13) and is guided in a linear manner in the sliding swivel (29, 29', 29". 29''') of the arm (30).

6. A device, according to Claim 1 or any one of the subsequent claims, characterised in that inserted brakes (26) are capable of supporting the cranks (12, 13) with respect to the supporting structure (9).

7. A device, according to Claim 1 or any one of the subsequent claims, having a drive (31) for tilting and rotating the tool holder (38) which is mounted on the arm (30) and whose drive shaft (35) penetrates the arm (30) which is formed as a hollow body, characterised in that two shafts (35, 37) are provided which are coaxial to the longitudinal axis of the arm (30) and which have associated drives (31), one (35) of which shafts (35, 37) drives an angle drive whose pinion is connected to the tool holder (6, 38) and rests on a hinged axle (7) which is mounted on the other shaft (37) transverse to the longitudinal axis of the arm (30).

8. A device, according to Claim 1 or any one of the subsequent claims, characterised in that the connecting rods (15, 16) are coupled to bearings (171, 172) which are disposed on both sides of the longitudinal axis of the arm (30).

9. A device, according to Claim 1, characterised in that a pivot drive (54, 55) acts upon the arm (30) transverse to the longitudinal direction thereof.

10. A device, according to Claim 1 or any one of the subsequent claims, characterised in that the sliding swivel (29''') is movably disposed and is connected via a pair of guide rods (39, 40) to the connecting rods (15, 16).

11. A device, according to Claim 10, characterised in that the sliding swivel (29‴) is formed as a sleeve and comprises a slide guide (48, 49) — for the arm (30) — which extends along the longitudinal axis of the arm (30).

12. A device, according to Claim 10, characterised in that the sliding swivel is formed as a sleeve (43) which encloses the arm (30) so as to leave clearance, and in that the joint pins (46, 47) which guide the pair of guide rods (39, 40) on the sleeve (43) penetrate the interior of the sleeve (43) and are provided with guide elements (48) on which the arm (30) is movable in a linear manner with suitable guide elements (49).

13. A device, according to Claim 10 or any subsequent claim, characterised in that the connecting rods (15, 16) are formed as angle levers whose joints (19, 20, 171, 172) associated with the cranks (12, 13) and/or the arm (30) are situated nearer to the longitudinal axis of the arm (30) than the imaginary longitudinal axis — of the connecting rods (15, 16) — through the coupling point of the guide rod (42).

## Revendications

1. Dispositif pour manutentionner un outil monté de façon pivotante et rotative sur un bras, notamment un outil de soudage par résistance, dans une chaîne de montage pour des éléments constitutifs de véhicules, le bras pouvant se déplacer dans trois dimensions, dispositif caractérisé en ce que le bras (30) est, d'une part, guidé de façon mobile suivant son axe longitudinal sur une articulation à translation et rotation (29, 29′, 29″, 29‴), et d'autre part, le bras est articulé à une paire de manivelles (12, 13) par l'intermédiaire d'une paire d'organes de liaison (15, 16), les manivelles (12, 13) étant associées respectivement à une unité d'entraînement (3, 4) qui se commande en soi.

2. Dispositif selon la revendication 1, caractérisé en ce que les axes de pivotement (14, 141, 142) des manivelles (12, 13) sont prévus sur l'articulation à translation et rotation (29, 29′, 29″, 29‴) ou son voisinage.

3. Dispositif selon l'une quelconque des revendications 1 ou 2, caractérisé en ce que l'axe longitudinal des bras (30) est guidé suivant la bissectrice des manivelles (12, 13) ou des organes de liaison (15, 16).

4. Dispositif selon la revendication 1 ou les revendications suivantes, caractérisé en ce que l'articulation à translation et rotation (29, 29′, 29″, 29‴) est prévue sur un bâti (9) du dispositif.

5. Dispositif selon la revendication 1 ou l'une des revendications suivantes, caractérisé en ce que l'articulation à translation et rotation (29, 29′,

29″, 29‴) coïncide avec l'axe de pivotement (14) des manivelles (12, 13) et le bras (30) de l'articulation (29, 29′, 29″, 29‴) est guidé de façon linéaire.

6. Dispositif selon la revendication 1 ou l'une des revendications suivantes, caractérisé en ce que les manivelles (12, 13) sont appuyées sur le bâti (9) par l'intermédiaire de freins (26).

7. Dispositif selon la revendication 1 ou l'une des revendications suivantes, comportant un entraînement (31) pour le pivotement et la rotation du porte-outil (38) sur le bras (30) dont l'arbre moteur (35) traverse le bras (30) réalisé en forme de corps creux, caractérisé en ce qu'il comporte deux arbres (35, 37) munis de moyens d'entraînement (31) et qui sont coaxiaux à l'axe longitudinal du bras (30), l'un des arbres (35) entraînant un renvoi d'angle dont le pignon de sortie est relié au porte-outil (6, 38) en étant monté sur un axe d'articulation (7), l'autre arbre (37) étant monté transversalement à l'axe longitudinal du bras (30).

8. Dispositif selon la revendication 1 ou l'une des suivantes, caractérisé en ce que les organes de liaison (15, 16) sont articulés sur des paliers (171, 172) de part et d'autre de l'axe longitudinal du bras (30).

9. Dispositif selon la revendication 1, caractérisé par un moyen d'entraînement de basculement (54, 55) agissant sur le bras (30) transversalement à son axe longitudinal.

10. Dispositif selon la revendication 1 ou l'une des revendications suivantes, caractérisé en ce que l'organe d'articulation par rotation et par translation (29‴) est monté mobile et est relié de façon articulée aux organes de liaison (15, 16) par l'intermédiaire d'une paire de bras (39, 40).

11. Dispositif suivant la revendication 10, caractérisé en ce que l'organe d'articulation par rotation et translation (29‴) est constitué par un manchon (43) et comporte un moyen de guidage en translation (48, 49) pour le bras (30) et qui s'étend le long de l'axe longitudinal du bras (30).

12. Dispositif selon la revendication 10, caractérisé en ce que l'organe d'articulation par rotation et translation est en forme de manchon (43) qui entoure le bras (30) en laissant du jeu et en ce que les goujons d'articulation (46, 47) guidant la paire de bras (39, 40) sur le manchon (43) traversent le manchon (43) vers l'intérieur et comportent des éléments de guidage (48) sur lesquels le bras (30) se déplace linéairement par des organes de guidage (49) appropriés.

13. Dispositif selon la revendication 10 ou les suivantes, caractérisé en ce que les organes de liaison (15, 16) sont en forme de leviers coudés dont les manivelles (12, 13) ou/et les articulations associées au bras (30) sont plus près de l'axe longitudinal du bras (30) que l'axe longitudinal géométrique des organes de liaison (15, 16) passant par le point d'articulation des bras (42).

FIG. 2

FIG.1

FIG. 3

0014768

0 014 768

−3/6−

30

34

32

31

35

31

33

36

17

37

7

38

6

FIG.4

3

4/6

FIG.5

FIG 6

5 / 6

FIG. 7

c./c.

41   39   49          50   46          48   40

29''''

30   51   49          50   47   48   52   43   42

FIG.8